# EUROPÄISCHE PATENTSCHRIFT

(11) **EP 2 602 015 B1**
(45) Veröffentlichungstag und Bekanntmachung des Hinweises auf die Patenterteilung: **03.06.2015**
(21) Anmeldenummer: 12005197.4
(22) Anmeldetag: 14.07.2012
(51) Int. Cl.: B01D 45/14, F01M 13/04

(54) **Vorrichtung zum Reinigen der Kurbelgehäusegase von Brennkraftmaschinen**
Device for cleaning crank housing gases of combustion engines
Dispositif de nettoyage des gaz du carter du vilebrequin de moteurs à combustion interne

(30) Priorität: 08.12.2011 DE 102011120473
(43) Veröffentlichungstag der Anmeldung: 12.06.2013
(73) Patentinhaber: MAN Truck & Bus AG, 80995 München (DE)
(72) Erfinder: Schneider, Thomas, 91710 Gunzenhausen (DE)

(56) Entgegenhaltungen:
- EP-B1- 1 549 438
- DE-A1-102008 061 058
- US-A- 2 593 294

## Beschreibung

Die vorliegende Erfindung betrifft eine Vorrichtung zum Reinigen der Kurbelgehäusegase von Brennkraftmaschinen mit einem Zentrifugalabscheider, gemäß dem Oberbegriff des Patentanspruchs 1.

Eine gattungsgemäße Vorrichtung mit einem Zentrifugalabscheider, dessen Rotor über einen Zahnradtrieb angetrieben ist, zeigt beispielsweise die EP 1 549 438 B1. Dabei werden die aus dem Kurbelgehäuse abgeführten Rohgase in eine um die Antriebswelle zentral angeordnete Kammer geleitet und von dort über konisch ausgebildete Leitringe radial nach außen zu einem ringförmigen Gehäuse geführt, wobei durch die Zentrifugalwirkung an den Leitringen sich ablagernden Verunreinigungen, insbesondere Öltröpfchen, abgeschleudert und an der Gehäusewand nach unten abströmen können. Die Reingase hingegen werden über den zwischen der Gehäusewand und der äußeren Peripherie der Leitringe gebildeten Ringraum in eine von der Gehäusewand getrennte Ableitung abgeführt und schließlich zum Beispiel dem Ansaugsystem der Brennkraftmaschine zugeführt.

Gleiches gilt zum Beispiel für den Gegenstand der WO 2004/041 442 A1, bei der der Rotor allerdings elektrisch angetrieben ist.

Aufgabe der Erfindung ist es, eine Vorrichtung der gattungsgemäßen Art vorzuschlagen, die bei konstruktiv einfacher Gestaltung eine verbesserte Abtrennung von Verunreinigungen im Zentrifugalabscheider ermöglicht und die konstruktiv einfach und montagegünstig an der Brennkraftmaschine verbaubar ist.

Die Lösung dieser Aufgabe gelingt mit den Merkmalen des Patentanspruchs 1. Vorteilhafte und besonders zweckmäßige Ausgestaltungen der Erfindung sind Gegenstand der Unteransprüche.

Erfindungsgemäß wird vorgeschlagen, dass der Rotor ein durch Leitringe getragenes, radial äußeres Ringelement, das ein Ringblech sein kann, mit ersten Durchbrüchen zum Abführen der Verunreinigungen in zumindest einen, im Gehäuse ausgebildeten, korrespondierenden Ringkanal und mit zweiten Durchbrüchen, die bevorzugt im Querschnitt größer sind als die ersten Durchbrüche, zum Abführen des Reingases in zumindest einen weiteren, korrespondierenden Ringkanal aufweist, wobei an dem Ringblech zumindest ein zwischen zwei tragenden Leitringen radial nach innen ragender, konischer Zwischenring, der als Zwischenblech ausgeführt sein kann, vorgesehen ist, der radial innenliegend die beiderseits des Zwischenrings gebildeten Ringkammern miteinander verbindet. Durch den erfindungsgemäßen Vorschlag werden die Verunreinigungen bzw. Ölfragmente und das Reingas absolut getrennt über Ringkanäle im radial äußeren Gehäuse abgeführt, so dass eine Wedervermischung ausgeschlossen ist. Das radial nach innen offene Zwischenblech bewirkt neben der Separierung der beiden Teilströme eine Strömungsumkehr von der die Verunreinigungen abführenden Ringkammer in die die Reinluft abführende Ringkammer. Der konstruktive Aufbau des Zentrifugalabscheiders und dessen Anordnung an der Brennkraftmaschine ist dabei durch das lediglich mehrere Ringkanäle und entsprechende Abführstutzen aufweisende Gehäuse stark vereinfacht.

Eine die Strömungsverhältnisse im Zentrifugalabscheider positiv beeinflussende Auslegung wird ferner dadurch erreicht, dass zumindest zwei das Ringblech tragende, konisch ausgeführte Leitringe vorgesehen sind, zwischen denen das Zwischenblech derart angeordnet ist, dass die die Verunreinigungen abführende Ringkammer ein kleineres Volumen und die das Reingas abführende Ringkammer ein größeres Volumen aufweist.

Dabei können ferner die fensterförmigen Ausnehmungen in dem hohlen Rotor axial so ausgeführt sein, dass sie die Ringkammer zum Abführen der Verunreinigungen vollständig und die Ringkammer zum Abführen des Reingases nur in geringerem Maße überdecken. Damit gelingt eine weitere, gezielte Strömungsverteilung im Rotor bzw. zwischen den durch die Leitringe gebildeten Ringkammern mit teilweiser Strömungsverwirbelung.

In vorteilhafter Weiterbildung der Erfindung können axial benachbart zu den mit den beiden Ringkammern korrespondierenden Ringkanälen im Gehäuse ein weiterer, an die Leitbleche anschließender Ringkanal zum Abführen von Verunreinigungen und/oder ein weiterer Ringkanal zum Abführen des Reingases in das Gehäuse integriert sein. An die Ringkanäle können weitere Leitringe und/oder Zwischenbleche anschließen und/oder die Ringkanäle dienen quasi als Ableitungen zum Abführen von Streugasen oder Kriechölen aus den Verunreinigungen.

In funktionell und fertigungstechnisch günstiger Weise kann der angetriebene Rotor durch eine einerseits geschlossene Hohlwelle gebildet sein, auf der die mit dem Ringblech verbundenen, dünnwandigen Leitringe kraft- und/oder stoffschlüssig befestigt sind. Dementsprechend kann die Hohlwelle ein konstruktiv einfaches Rohr sein, auf dem die Leitringe, das äußere Ringblech und das zumindest eine Zwischenblech als Vormontageeinheit hergestellt befestigbar sind.

In einer weiteren, alternativen Ausgestaltung der Erfindung können zwei hintereinander geschaltete Zentrifugalabscheider vorgesehen sein, von denen in Strömungsrichtung der Gase der Erste als Grobabscheider und der Zweite als Feinabscheider ausgelegt sind. Der Grobabscheider und der Feinabscheider können dabei besonders zweckmäßig in der Rotordrehzahl und/oder im wirksamen Durchmesser der Leitringe, des Zwischenblechs und des Gehäuses unterschiedlich ausgelegt sein, um somit eine noch wirkungsvollere Reinigung der Kurbelgehäuse zu ermöglichen.

Eine hinsichtlich des Bauraums und der Leitungsführung der Gase besonders vorteilhafte Anordnung des zumindest einen Zentrifugalabscheiders wird erzielt, indem dieser oberhalb des Kurbelgehäuses und zwischen den Zylinderbänken einer V-Brennkraftmaschine angeordnet und mittels eines Zahnradtriebs angetrieben ist, dessen Antriebszahnrad trieblich mit einem Steuertrieb der Brennkraftmaschine und dessen Abtriebszahnrad mit einem am Rotor befestigten Zahnrad in Eingriff ist. Der Zentrifugalabscheider liegt somit in unmittelbarer Nachbarschaft zum Kurbelgehäuse einerseits und zum darüber zwischen den Zylinderköpfen der Brennkraftmaschine angeordneten Ansaugverteiler (Saugrohr) andererseits, so dass beiderseits relativ kurze Leitungsführungen möglich sind.

Durch die beschriebene Konstruktion des Zentrifugalabscheiders kann dieser liegend als auch stehend angeordnet sein, wobei bei stehender Anordnung das Abtriebszahnrad und das am Rotor befestigte Zahnrad durch Kegelzahnräder gebildet sind.

Des Weiteren können bei zwei parallel zueinander angeordneten, liegenden Zentrifugalabscheidern das auf dem einen Rotor befestigte Zahnrad mit dem Zahnrad auf dem benachbarten Rotor kämmen. Der zweite Zentrifugalabscheider ist somit in einfacher Weiterbildung des Zahnradtriebs unmittelbar an diesen angeschlossen, wobei sich die Drehrichtung des Rotors dadurch umgekehrt.

Schließlich kann der Zahnradtrieb zum Antrieb zumindest eines Zentrifugalabscheiders über ein Zwischenzahnrad auf das Antriebszahnrad einer ebenfalls oberhalb des Kurbelgehäuses und zwischen den Zylinderbänken der Brennkraftmaschine angeordneten Hochdruck-Kraftstoffpumpe abtreiben.

Mehrere Ausführungsbeispiele der Erfindung sind im Folgenden mit weiteren Einzelheiten näher erläutert, Die schematische Zeichnung zeigt in:
Fig. 1 einen teilweise dargestellten Zentrifugalabscheider für Kurbelgehäusegase von Brennkraftmaschinen in einem Längsschnitt durch das Gehäuse, den Rotor mit Leitringen, einem Ringblech und einem Zwischenblech sowie mit der angetriebenen Hohlwelle;
Fig. 2 in Einzeldarstellung die als Vormontageinheit des Rotors des Zentrifugalabscheiders nach Fig. 1 ausgeführten Leitringe mit Zwischenblech und Ringblech;
Fig. 3 in vereinfachter Darstellung die Hohlwelle des Rotors mit den die Kurbelgehäusegase radial nach außen leitenden Ausnehmungen;
Fig. 4 in Einzeldarstellung das den Rotor umgebende, zylindrische Gehäuse des Zentrifugalabscheiders nach Fig. 1, mit den integrierten Ringkanälen für die Reingase und die abgeschiedenen Verunreinigungen;
Fig. 5 grob schematisch die Anordnung zweier achsparallel zueinander angeordneter, hintereinander geschalteter Zentrifugalabscheider, von denen der eine als Grobabscheider und der zweite als Feinabscheider ausgelegt sind;
Fig. 6 die Anordnung der beiden Zentrifugalabscheider nach Fig. 5 im V-Raum oberhalb des Zylinder-Kurbelgehäuses und zwischen zwei Zylinderbänken einer V-Brennkraftmaschine;
Fig. 7 ein einfaches Schaltbild des die beiden Zentrifugalabscheider nach den Fig. 5 und 6 antreibenden Zahnradtriebs der Brennkraftmaschine; und
Fig. 8 ein weiteres Schaltbild des Zahnradtriebs nach Fig. 7 für einen stehend angeordneten Zentrifugalabscheider mittels zweier Kegelzahnräder.

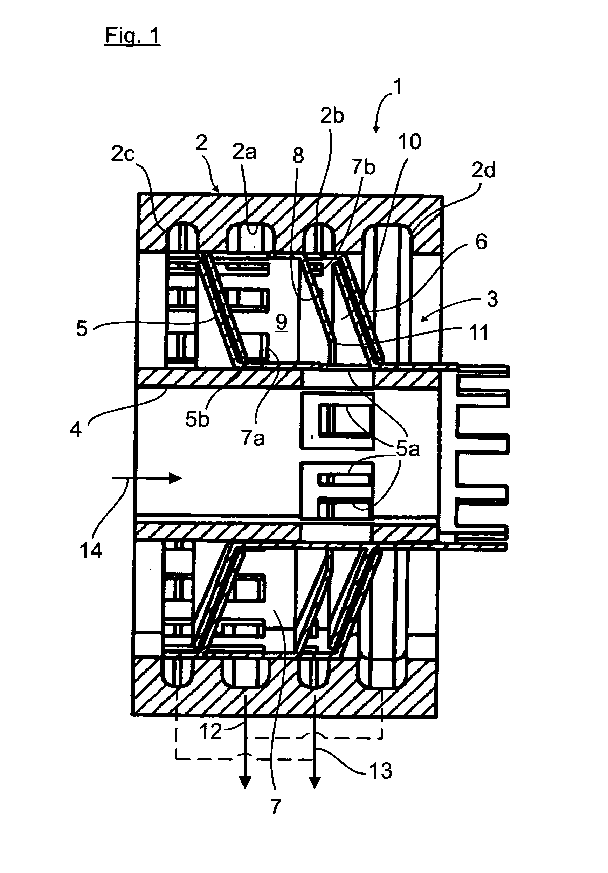

Die Fig. 1 bis 4 zeigen den grundsätzlichen Aufbau des Zentrifugalabscheiders 1 einer Vorrichtung zum Reinigen der Kurbelgehäusegase einer Brennkraftmaschine, bei der in an sich bekannter Weise die mit Ölfragmenten und gegebenenfalls weiteren Verunreinigungen durchsetzten Kurbelgehäusegase (im Weiteren als Rohgase bezeichnet) zentral in den Abscheider 1 gefördert und durch Zentrifugalwirkung von den Verunreinigungen getrennt als Reingase dem Ansaugsystem der Brennkraftmaschine zugeführt werden.

Der Abscheider 1 setzt sich dabei im Wesentlichen aus einem äußeren, ringförmigen Gehäuse 2 und einem in diesem drehbar gelagerten Rotor 3 zusammen (die Drehlagerung ist nicht dargestellt, kann aber in bekannter Weise durch eine Wälzlagerung oder Gleitlagerung gebildet sein).

Der Rotor 3 weist eine hohle, rohrförmige Antriebswelle 4 auf, die in noch zu beschreibender Weise von der Brennkraftmaschine angetrieben ist und auf der eine Vormontageeinheit befestigt ist, die sich aus zwei dünnwandigen Leitringen 5, 6, einem radial äußeren, die Leitringe 5, 6 verbindenden Ringelement, das hier als Ringblech 7 ausgeführt ist und einem Zwischenelement, das hier als Zwischenblech 8 ausgeführt ist, zusammensetzt.

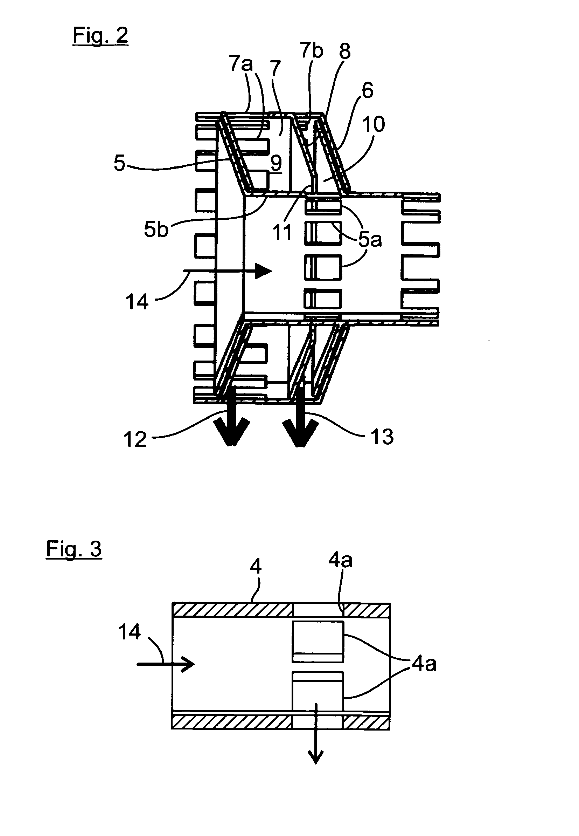

Die Leitringe 5, 6 sind dabei - wie insbesondere aus Fig. 2 ersichtlich ist - teilweise doppelwandig und konisch mit inneren und äußeren Randflanschen hergestellt und zum Beispiel auf die Antriebswelle 4 aufgepresst bzw. mit dem äußeren Ringblech 7 verschweißt.

Das ebenfalls konische Zwischenblech 8 ist an dem äußeren Ringblech 7 befestigt und verläuft zwischen den Leitringen 5, 6 und unterteilt somit zwei Ringkammern 9, 10, die jeweils gegenüberliegend von den Leitringen 5, 6 begrenzt sind.

Das Zwischenblech 8 grenzt jedoch radial innen nicht an die Randflansche der Leitringe 5, 6 an, sondern bildet unter Belassung eines Ringspalts 11 eine Strömungsverbindung zwischen den Ringkammern 9, 10.

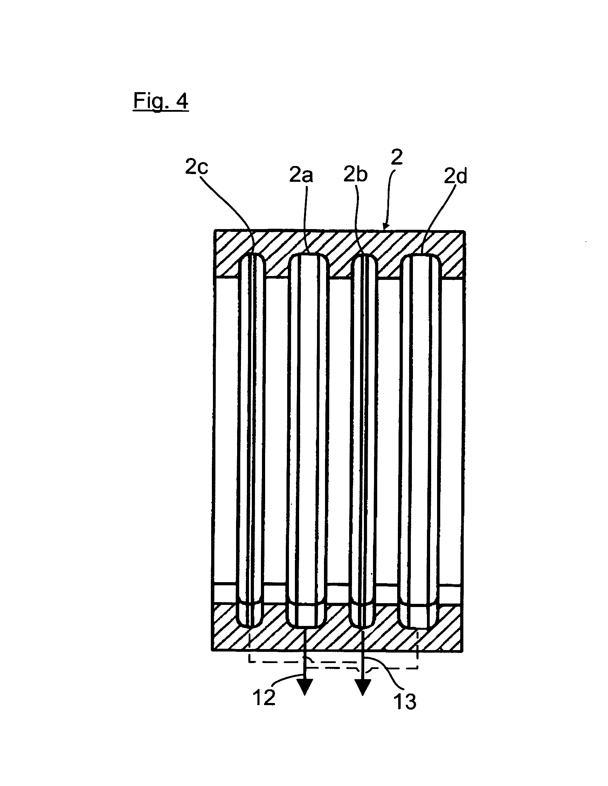

In dem rohrförmigen Randflansch 5b des einen Leitrings 5 sind fensterförmige Durchbrüche 5a eingearbeitet, die die kleinere Ringkammer 10 vollständig und die größere Ringkammer 9 teilweise überdecken, also einen Strömungsdurchgang radial nach außen bilden. Die Durchbrüche 5a überdecken sich im montierten Zustand mit größer ausgeführten, fensterförmigen Durchbrüchen 4a (vergleiche Fig. 1 oder 4) in der Antriebswelle 4, so dass eine offene Verbindung zwischen dem Innenraum der Antriebswelle 4 und den Ringkammern 9, 10 im Rotor 3 geschaffen ist.

In dem äußeren Ringblech 7 in Verbindung mit den äußeren Randflanschen der tragenden Leitringe 5 und 6 sind weitere Durchbrüche 7a, 7b vorgesehen, die eine Strömungsverbindung nach außen, dem ringförmigen Gehäuse 2 zu bilden. Die Durchbrüche7a, 7b liegen dabei im Wesentlichen in einer einheitlichen Rotationsebene mit in dem Gehäuse 2 vorgesehenen Ringkanälen 2a, 2b. Durch den relativ geringen Abstand bzw. Umfangsspalt zwischen den Ringblech 7 und dem ringförmigen Gehäuse 2 sind die Ringkammern 9, 10 bzw. die Ringkanäle 2a, 2b quasi voneinander getrennt.

Zur Ableitung gegebenenfalls von Kriechströmen oder Verwirbelungen innerhalb des Gehäuses 2 können beiderseits der beschriebenen Ringkanäle 2a, 2b weitere, gleichermaßen ausgeführte Ringkanäle 2c, 2d vorgesehen sein, die gegebenenfalls auch mit weiteren Leitringen 5, 6 und einem Zwischenblech 8 zusammenwirken können.

Der im Querschnitt größere Ringkanal 2a korrespondiert unmittelbar mit den im Durchströmquerschnitt größeren Durchbrüchen 7a des Ringblechs 7, während der im Querschnitt kleinere Ringkanal 2b mit den im Durchströmquerschnitt kleineren Durchbrüchen 7b kommuniziert.

Die Ringkanäle 2a, 2b (und gegebenenfalls 2c, 2d) sind mit Abführstutzen (durch die Pfeile 12, 13 in den Fig. 1 und 2 angedeutet) verbunden, über die die Reingase aus dem größeren Ringkanal 2a und die Verunreinigungen, insbesondere das abgeschiedene Schmieröl, aus dem kleineren Ringkanal 2b abgeführt werden. Das Reingas wird dabei dem Ansaugsystem der Brennkraftmaschine und das Schmieröl wieder dem Kurbelgehäuse der Brennkraftmaschine zugeführt.

Im Betrieb des Zentrifugalabscheiders 1 werden über einen entsprechenden Leitungsanschluss (Pfeil 14) der mit einer definierten Drehzahl angetriebenen Antriebswelle 4 die Rohgase der Kurbelgehäuseentlüftung zugeführt. Die nur teilweise dargestellte Antriebswelle 4 ist andererseits geschlossen.

Von dort strömt das Rohgas über die Ausnehmungen 4a und die Durchbrüche 5a radial nach außen, wobei in der kleineren Ringkammer 10 die im Rohgas enthaltenen Öltröpfchen an dem rotierenden Leitring 6 und dem Zwischenblech 8 abgeschieden und durch die Zentrifugalwirkung nach außen geführt werden, wo sie durch die Durchbrüche 7b im Ringblech 7 in den Ringkanal 2b des Gehäuses 2 abströmen.

Das Reingas strömt nach entsprechender Verwirbelung und Umlenkung in der Ringkammer 10 in die Ringkammer 9 über wird von dort über die Durchbrüche 7a im Ringblech 7 in den querschnittsgrößeren Ringkanal 2a abgeleitet. Die beiden Ströme (Reingas und Öl) sind dabei über die Spaltdichtung des Ringblechs 7 voneinander getrennt.

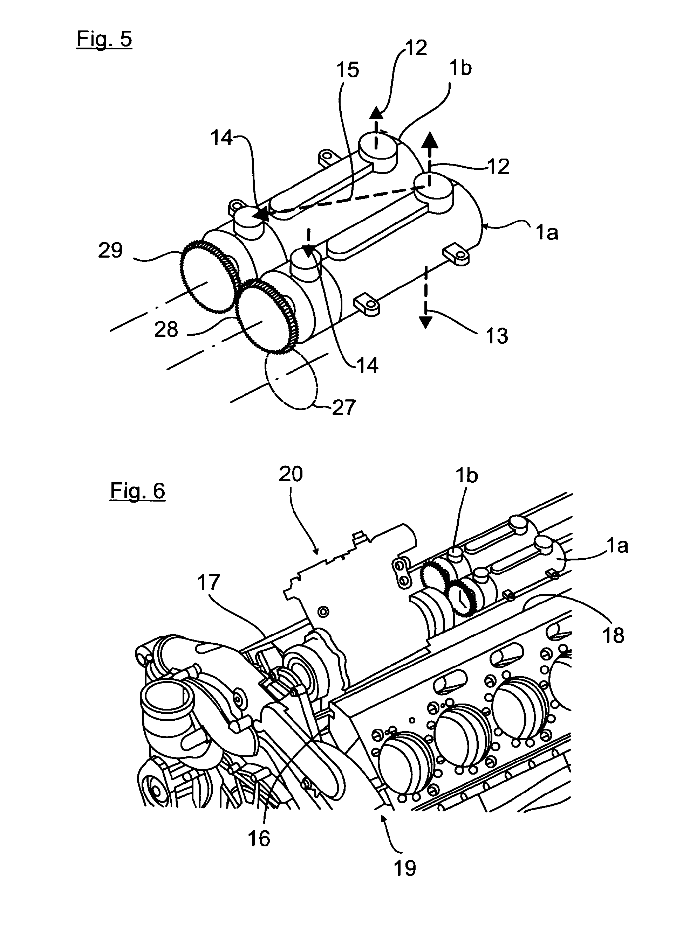

Die Fig. 5 zeigt skizzenhaft zwei Zentrifugalabscheider 1a, 1b, die achsparallel zueinander angeordnet sind und die als Grobabscheider 1a und als Feinabscheider 1 b ausgelegt und funktionell hintereinander geschaltet sind.

Dabei wird das Rohgas zunächst wie vorbeschrieben dem Rotor 3 des Grobabscheiders 1a (Pfeil 14) zugeführt. Das durch die Zentrifugalwirkung abgetrennte Schmieröl wird nach unten (Pfeil 13) zum Kurbelgehäuse abgeführt.

Das somit vorgereinigte Gas (Pfeil 12) wird über eine Überströmleitung 15 der Eingangsseite (Pfeil 14) des Feinabscheiders 1b zugeführt und dann wie zu den Fig. 1 bis 4 beschrieben als Reingas und weiteres Schmieröl abgeführt.

Die beiden hintereinander geschalteten Zentrifugalabscheider 1a, 1 b können in ihrer Antriebsdrehzahl als auch der geometrischen Auslegung (Durchströmquerschnitte, etc.) unterschiedlich konzipiert sein.

In bevorzugter Weise können die beiden Zentrifugalabscheider 1a, 1b wie in Fig. 6 angedeutet oberhalb des Kurbelgehäuses 16 (es ist nur die obere Wand des Kurbelgehäuses ersichtlich) in dem zwischen den Zylinderbänken 17, 18 gebildeten Raum der Brennkraftmaschine 19 mit V-förmiger Anordnung der Zylinder eingebaut sein. Dabei kann ferner in den nachstehend beschriebenen Antriebsstrang eine hier lediglich schematisch gezeigte Kraftstoff-Hochdruckpumpe 20 eingeschaltet sein.

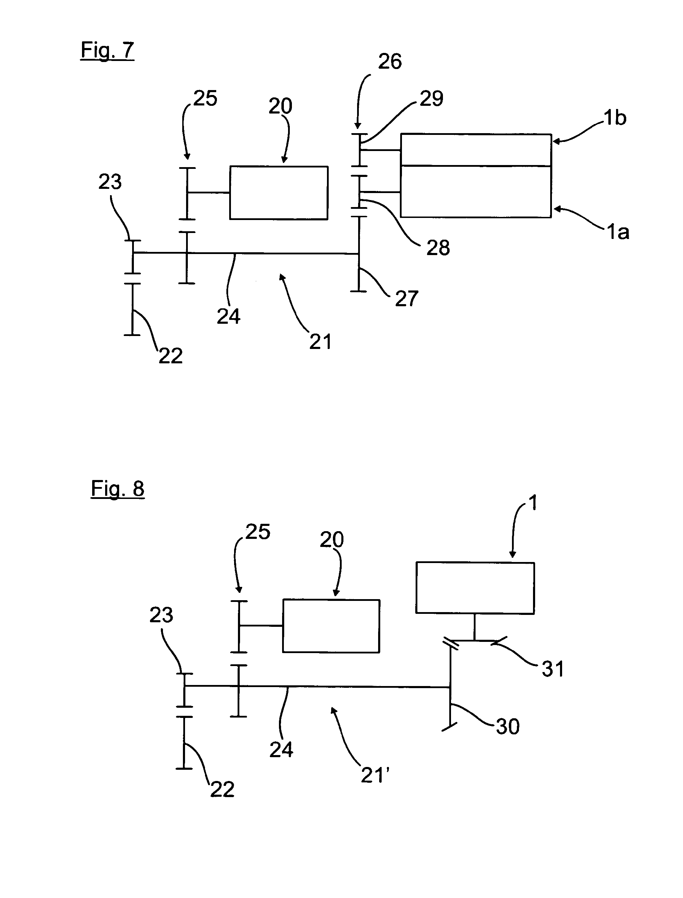

Die beiden Zentrifugalabscheider 1a, 1b und die Hochdruckpumpe 20 sind mittels eines Zahnradtriebs 21 (Fig. 7) von dem nicht weiter dargestellten Steuerungsantrieb der Brennkraftmaschine angetrieben, wobei ein abtreibendes Zahnrad 22 des Steuerungsantriebs mit einem Antriebszahnrad 23 des Zahnradtriebs 21 in Eingriff ist.

Das Antriebszahnrad 23 sitzt auf einer im Kurbelgehäuse 16 drehbar gelagerten Welle 24, die über einen ersten Stirnzahnradtrieb 25 die Hochdruckpumpe und über einen zweiten Stirnzahnradtrieb 26 die beiden Zentrifugalabscheider 1a, 1b bzw. deren Rotoren 3 antreibt.

Dabei treibt das Zahnrad 27 auf der Welle 24 das Antriebszahnrad 28 des einen Zentrifugalabscheiders 1a und dieses über einen weiteren Zahneingriff das zweite Antriebszahnrad 29 des zweiten Zentrifugalabscheiders 1b an.

Die Fig. 8 schließlich zeigt eine weitere, alternative Ausführung eines Zentrifugalabscheiders 1 in stehender Anordnung oberhalb des Kurbelgehäuses 16 der Brennkraftmaschine 19, bei der der Zahnradtrieb 21' entsprechend modifiziert ist. Anstelle des Stirnzahnradtriebs 26 gemäß Fig. 7 ist auf der Welle 24 ein Kegelzahnrad 30 befestigt, das mit einem Kegelzahnrad 31 einen Kegeltrieb zum Antrieb des stehenden Rotors 3 des Zentrifugalabscheiders 1 bildet.

Anstelle zweier liegend angeordneter Zentrifugalabscheider 1a, 1 b (Fig. 5 bis 7) kann auch nur ein Zentrifugalabscheider 1 in liegender Anordnung verwendet sein, wobei dann das weitere Antriebszahnrad 29 gemäß Fig. 7 entsprechend entfällt.

### BEZUGSZEICHENLISTE

- 1: Zentrifugalabscheider
- 1a: Grobabscheider
- 1b: Feinabscheider
- 2: Gehäuse
- 2a: Ringkanal
- 2b: Ringkanal
- 2c: Ringkanal
- 2d: Ringkanal
- 3: Rotor
- 4: Antriebswelle
- 4a: Ausnehmungen
- 5: Leitring
- 5a: Ringflansch
- 5b: Durchbrüche
- 6: Leitring
- 7: Ringblech
- 7a: Durchbrüche
- 7b: Durchbrüche
- 8: Zwischenblech
- 9: Ringkammer
- 10: Ringkammer
- 11: Ringspalt
- 12: Ableitung Reingas
- 13: Ableitung Verunreinigungen
- 14: Zuführung Rohgas
- 15: Überströmleitung
- 16: Kurbelgehäusewand
- 17: Zylinderbank
- 18: Zylinderbank
- 19: Brennkraftmaschine
- 20: Hochdruckpumpe
- 21: Zahnradtrieb
- 22: Abtriebszahnrad Steuertrieb
- 23: Antriebszahnrad
- 24: Welle
- 25: Stirnzahnradtrieb
- 26: Stirnzahnradtrieb
- 27: Abtriebszahnrad Welle
- 28: Antriebszahnrad
- 29: Antriebszahnrad
- 30: Kegelzahnrad
- 31: Kegelzahnrad

## Patentansprüche

1. Vorrichtung zum Reinigen der Kurbelgehäusegase von Brennkraftmaschinen mit einem Zentrifugalabscheider, der einen angetriebenen Rotor (3) mit konisch angeordneten Leitringen (5, 6) und ein umgebendes Gehäuse (2) aufweist und bei dem die Rohgase über den hohlen, Ausnehmungen zu den Leitringen (5, 6) aufweisenden Rotor (3) zentral zugeführt und an den Leitringen (5, 6) sich ablagernde Verunreinigungen wie Öltröpfchen radial nach außen dem Gehäuses (2) zu abgeschleudert und getrennt von den Reingasen abgeführt werden, **dadurch gekennzeichnet, dass** der Rotor (3) ein durch die Leitringe (5, 6) getragenes, radial äußeres Ringelement, insbersondere Ringblech (7), mit ersten Durchbrüchen (7b) zum Abführen der Verunreinigungen in zumindest einen, im Gehäuse (2) ausgebildeten, korrespondierenden Ringkanal (2b) und mit zweiten, bevorzugt im Querschnitt gegenüber den ersten Durchbrüchen (7b) größeren Durchbrüchen (7a) zum Abführen des Reingases in zumindest einen weiteren, korrespondierenden Ringkanal (2a) aufweist, wobei an dem Ringelement insbesondere Ringblech (7), zumindest ein zwischen zwei tragenden Leitringen (5, 6) radial nach innen ragender, konischer Zwischenring, insbersondere Zwischenblech (8), vorgesehen ist, der radial innenliegend die beiderseits des Zwischenrings, insbesondere Zwischenblech (8), gebildeten Ringkammern (9, 10) miteinander verbindet.

2. Vorrichtung nach Anspruch 1, **dadurch gekennzeichnet, dass** zumindest zwei das Ringblech (7) tragende, konisch ausgeführte Leitringe (5, 6) vorgesehen sind, zwischen denen das Zwischenblech (8) derart angeordnet ist, dass die die Verunreinigungen abführende Ringkammer (10) ein kleineres Volumen und die das Reingas abführende Ringkammer (9) ein größeres Volumen aufweist.

3. Vorrichtung nach Anspruch 2, **dadurch gekennzeichnet, dass** die fensterförmigen Ausnehmungen in dem hohlen Rotor (3) axial so ausgeführt sind, dass sie die Ringkammer (9) zum Abführen der Verunreinigungen vollständig und die Ringkammer (10) zum Abführen des Reingases nur in geringerem Maße überdecken.

4. Vorrichtung nach einem der vorhergehenden Ansprüche, **dadurch gekennzeichnet, dass** axial benachbart zu den mit den beiden Ringkammern (9, 10) korrespondierenden Ringkanälen (2a, 2b) im Gehäuse (2) ein weiterer, an die Leitbleche (5, 6) anschließender Ringkanal (2c) zum Abführen von Verunreinigungen und/oder ein weiterer Ringkanal (2d) zum Abführen des Reingases in das Gehäuse (2) integriert ist.

5. Vorrichtung nach einem der vorhergehenden Ansprüche, **dadurch gekennzeichnet, dass** der angetriebene Rotor (3) durch eine einerseits geschlossene, rohrförmige Antriebswelle (4) gebildet ist, auf der die mit dem Ringblech (7) verbundenen, dünnwandigen Leitringe (5, 6) kraft- und/oder stoffschlüssig befestigt sind.

6. Vorrichtung nach einem der vorhergehenden Ansprüche, **dadurch gekennzeichnet, dass** zwei hintereinander geschaltete Zentrifugalabscheider vorgesehen sind, von denen in Strömungsrichtung der Gase der Erste als Grobabscheider (1 a) und der Zweite als Feinabscheider (1 b) ausgelegt sind.

7. Vorrichtung nach Anspruch 6, **dadurch gekennzeichnet, dass** der Grobabscheider (1a) und der Feinabscheider (1b) der zwei Zentrifugalabscheider in der Rotordrehzahl und/oder im wirksamen Durchmesser der Leitringe (5, 6), des Zwischenblechs (8) und des Gehäuses (2) unterschiedlich ausgelegt sind.

8. Vorrichtung nach einem der vorhergehenden Ansprüche, **dadurch gekennzeichnet, dass** der zumindest eine Zentrifugalabscheider (1) oberhalb des Kurbelgehäuses und zwischen den Zylinderbänken (17, 18) einer V-Brennkraftmaschine (19) angeordnet ist und mittels eines Zahnradtriebs (21; 21') angetrieben ist, dessen Antriebszahnrad (23) trieblich mit einem Steuertrieb der Brennkraftmaschine (19) und dessen Abtriebszahnrad (27) mit einem am Rotor (3) befestigten Antriebszahnrad (28) in Eingriff ist.

9. Vorrichtung nach Anspruch 8, **dadurch gekennzeichnet, dass** der Zentrifugalabscheider (1) stehend angeordnet ist und dass das Abtriebszahnrad und das am Rotor (3) befestigte Zahnrad durch Kegelzahnräder (30, 31) gebildet sind.

10. Vorrichtung nach Anspruch 8, **dadurch gekennzeichnet, dass** bei zwei parallel zueinander angeordneten Zentrifugalabscheidern (1a, 1b) das auf dem einen Rotor (3) befestigte Zahnrad (28) mit dem Zahnrad (29) auf dem benachbarten Rotor (3) kämmt.

11. Vorrichtung nach einem der vorhergehenden Ansprüche, **dadurch gekennzeichnet, dass** der Zahnradtrieb (21; 21') zum Antrieb zumindest eines Zentrifugalabscheiders (1) über einen weiteren Stirnradtrieb (25) eine ebenfalls oberhalb des Kurbelgehäuses und zwischen den Zylinderbänken (17, 18) der Brennkraftmaschine (19) angeordnete Hochdruck-Kraftstoffpumpe (20) antreibt.

## Claims

1. Apparatus for purifying the crankcase gases of internal combustion engines with a centrifugal separator which has a driven rotor (3) with conically arranged guide rings (5, 6) and has a surrounding housing (2) and in which the untreated gases are delivered centrally via the hollow rotor (3) having recesses to the guide rings (5, 6) and impurities, such as oil droplets, settling on the guide rings (5, 6) are thrown off radially outwards to the housing (2) and are discharged separately from the clean gases, **characterized in that** the rotor (3) has a radially outer ring element, in particular ring plate (7), carried by the guide rings (5, 6), with first perforations (7b) for discharging the impurities into at least one corresponding ring duct (2b) formed in the housing (2), and with second perforations (7a), preferably larger in cross section in relation to the first perforations (7b), for discharging the clean gas into at least one further corresponding ring duct (2a), there being provided on the ring element, in particular ring plate (7), at least one conical intermediate ring, in particular intermediate plate (8), which projects radially inwards between two carrying guide rings (5, 6), and which radially on the inside connects to one another the annular chambers (9, 10) formed on both sides of the intermediate ring, in particular intermediate plate (8).

2. Apparatus according to Claim 1, **characterized in that** at least two conically designed guide rings (5, 6) carrying the ring plate (7) are provided, between which the intermediate plate (8) is arranged in such a way that the annular chamber (10) discharging the impurities has a smaller volume and the annular chamber (9) discharging the clean gas has a larger volume.

3. Apparatus according to Claim 2, **characterized in that** the window-shaped recesses in the hollow rotor (3) are designed axially such that they cover the annular chamber (9) for discharging the impurities completely and the annular chamber (10) for discharging the clean gas to only a smaller extent.

4. Apparatus according to one of the preceding claims, **characterized in that** a further ring duct (2c), adjoining the guide plates (5, 6), for discharging impurities and/or a further ring duct (2d) for discharging the clean gas are/is integrated into the housing (2) axially adjacently to the ring ducts (2a, 2b) in the housing (2) which correspond to the two annular chambers (9, 10).

5. Apparatus according to one of the preceding claims, **characterized in that** the driven rotor (3) is formed by a tubular drive shaft (4) which is closed on one side and on which the thin-walled guide rings (5, 6) connected to the ring plate (7) are fastened non-positively and/or in a materially integral manner.

6. Apparatus according to one of the preceding claims, **characterized in that** two centrifugal separators connected in series are provided, of which the first is designed as a coarse separator (1a) and the second as a fine separator (1b) in the direction of flow of the gases.

7. Apparatus according to Claim 6, **characterized in that** the coarse separator (1a) and the fine separator (1b) of the two centrifugal separators are designed with a different rotor rotational speed and/or with a different effective diameter of the guide rings (5, 6), of the intermediate plate (8) and of the housing (2).

8. Apparatus according to one of the preceding claims, **characterized in that** the at least one centrifugal separator (1) is arranged above the crankcase and between the cylinder banks (17, 18) of a V-type internal combustion engine (19) and is driven by means of a gearwheel mechanism (21; 21'), of which the driving gearwheel (23) is in drive engagement with a control drive of the internal combustion engine (19) and of which the output gearwheel (27) is in engagement with a driving gearwheel (28) fastened to the rotor (3).

9. Apparatus according to Claim 8, **characterized in that** the centrifugal separator (1) is arranged vertically, and **in that** the output gearwheel and the gearwheel fastened to the rotor (3) are formed by bevel gearwheels (30, 31).

10. Apparatus according to claim 8, **characterized in that**, in the case of two centrifugal separators (1a, 1b) arranged parallel to one another, the gearwheel (28) fastened on one rotor (3) meshes with the gearwheel (29) on the adjacent rotor (3).

11. Apparatus according to one of the preceding claims, **characterized in that** the gearwheel mechanism (21; 21') for driving at least one centrifugal separator (1) drives via a further spur wheel mechanism (25) a high-pressure fuel pump (20) likewise arranged above the crankcase and between the cylinder banks (17, 18) of the internal combustion engine (19).

## Revendications

1. Dispositif de nettoyage des gaz du carter de vilebrequin de moteurs à combustion interne, comprenant un séparateur centrifuge qui présente un rotor entraîné (3) avec des bagues directrices (5, 6) disposées sous forme conique et un boîtier périphérique (2) et dans lequel les gaz bruts sont acheminés centralement par le biais du rotor (3) creux présentant des évidements conduisant aux bagues directrices (5, 6), et des impuretés telles que des gouttelettes d'huile s'accumulant au niveau des bagues directrices (5, 6) sont éjectées radialement vers l'extérieur du boîtier (2) par centrifugation et sont évacuées séparément des gaz purifiés, **caractérisé en ce que** le rotor (3) présente un élément annulaire radialement extérieur, en particulier une tôle annulaire (7), porté(e) par les bagues directrices (5, 6), avec des premiers orifices (7b) pour évacuer les impuretés dans au moins un canal annulaire correspondant (2b) réalisé dans le boîtier (2) et avec des deuxièmes orifices (7a) de préférence plus grands en section transversale par rapport aux premiers orifices (7b) pour évacuer le gaz purifié dans au moins un canal annulaire supplémentaire correspondant (2a), au moins une bague intermédiaire conique, en particulier une tôle intermédiaire (8), faisant saillie radialement vers l'intérieur entre deux bagues directrices de support (5, 6) étant prévue au niveau de l'élément annulaire, en particulier de la tôle annulaire (7), laquelle bague intermédiaire relie l'une à l'autre radialement à l'intérieur les chambres annulaires (9, 10) formées de chaque côté de la bague intermédiaire, en particulier de la tôle intermédiaire (8).

2. Dispositif selon la revendication 1, **caractérisé en ce qu'**au moins deux bagues directrices (5, 6) réalisées sous forme conique et portant la tôle annulaire (7) sont prévues, entre lesquelles est disposée la tôle intermédiaire (8) de telle sorte que la chambre annulaire (10) évacuant les impuretés présente un plus petit volume et que la chambre annulaire (9) évacuant le gaz purifié présente un plus grand volume.

3. Dispositif selon la revendication 2, **caractérisé en ce que** les évidements en forme de fenêtres dans le rotor creux (3) sont réalisés axialement de telle sorte qu'ils recouvrent complètement la chambre annulaire (9) pour l'évacuation des impuretés et qu'ils recouvrent seulement dans une moindre mesure la chambre annulaire (10) pour l'évacuation du gaz purifié.

4. Dispositif selon l'une quelconque des revendications précédentes, **caractérisé en ce qu'**axialement à côté des canaux annulaires (2a, 2b) correspondant aux deux chambres annulaires (9, 10) dans le boîtier (2) est intégré dans le boîtier (2) un canal annulaire supplémentaire (2c) se raccordant aux tôles directrices (5, 6) pour l'évacuation d'impuretés et/ou un canal annulaire supplémentaire (2d) pour l'évacuation du gaz purifié.

5. Dispositif selon l'une quelconque des revendications précédentes, **caractérisé en ce que** le rotor entraîné (3) est formé par un arbre d'entraînement de forme tubulaire (4) fermé d'un côté, sur lequel sont fixées, par engagement par liaison de matière et/ou par force, les bagues directrices à parois minces (5, 6) connectées à la tôle annulaire (7).

6. Dispositif selon l'une quelconque des revendications précédentes, **caractérisé en ce que** deux séparateurs centrifuges montés l'un derrière l'autre sont prévus, dont le premier, dans la direction d'écoulement des gaz, est réalisé sous forme de séparateur grossier (1a) et le deuxième est réalisé sous forme de séparateur fin (1b).

7. Dispositif selon la revendication 6, **caractérisé en ce que** le séparateur grossier (1a) et le séparateur fin (1b) des deux séparateurs centrifuges sont conçus différemment en termes de vitesse de rotation du rotor et/ou de diamètre efficace des bagues directrices (5, 6), de la tôle intermédiaire (8) et du boîtier (2).

8. Dispositif selon l'une quelconque des revendications précédentes, **caractérisé en ce que** l'au moins un séparateur centrifuge (1) est disposé au-dessus du carter de vilebrequin et entre les rangées de cylindres (17, 18) d'un moteur à combustion interne en V (19) et est entraîné au moyen d'un entraînement à roue dentée (21 ; 21') dont la roue dentée d'entraînement (23) est en prise d'entraînement avec un entraînement de commande du moteur à combustion interne (19) et dont la roue dentée de sortie (27) est en prise avec une roue dentée d'entraînement (28) fixée au rotor (3).

9. Dispositif selon la revendication 8, **caractérisé en ce que** le séparateur centrifuge (1) est disposé debout et **en ce que** la roue dentée de sortie et la roue dentée fixée au rotor (3) sont formées par des roues dentées coniques (30, 31).

10. Dispositif selon la revendication 8, **caractérisé en ce que**, dans le cas de deux séparateurs centrifuges (1a, 1b) disposés parallèlement l'un à l'autre, la roue dentée (28) fixée sur l'un des rotors (3) s'engrène avec la roue dentée (29) sur le rotor (3) adjacent.

11. Dispositif selon l'une quelconque des revendications précédentes, **caractérisé en ce que** l'entraînement à roue dentée (21 ; 21') pour l'entraînement d'au moins un séparateur centrifuge (1) par le biais d'un entraînement à pignon droit supplémentaire (25) entraîne une pompe à carburant haute pression (20) également disposée au-dessus du carter de vilebrequin et entre les rangées de cylindres (17, 18) du moteur à combustion interne (19).
